(19) **Europäisches Patentamt European Patent Office Office européen des brevets**

(11) **EP 3 194 713 B1**

(12) **FASCICULE DE BREVET EUROPEEN**

(45) Date de publication et mention de la délivrance du brevet:
**03.10.2018 Bulletin 2018/40**

(21) Numéro de dépôt: **14771607.0**

(22) Date de dépôt: **28.08.2014**

(51) Int Cl.:
*E21B 43/12* (2006.01)          *E21B 43/38* (2006.01)
*F03B 17/06* (2006.01)

(86) Numéro de dépôt international:
**PCT/FR2014/052140**

(87) Numéro de publication internationale:
**WO 2016/030585 (03.03.2016 Gazette 2016/09)**

(54) **SYSTÈME ET PROCÉDÉ D'EXTRACTION DE GAZ D'UN PUITS**

**VORRICHTUNG UND VERFAHREN ZUR GEWINNUNG VON GAS AUS EINEM SCHACHT**

**SYSTEM AND METHOD FOR GAS EXTRACTION FROM A WELL**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(43) Date de publication de la demande:
**26.07.2017 Bulletin 2017/30**

(73) Titulaire: **Total SA**
**92400 Courbevoie (FR)**

(72) Inventeurs:
• **BEAUQUIN, Jean-Louis**
**F-64110 Saint-Faust (FR)**
• **MAJ, Guillaume**
**F-38410 Saint Martin d'Uriage (FR)**
• **DANQUIGNY, Jacques**
**F-64320 Idron (FR)**
• **DELEERSNYDER, Matthieu**
**F-64018 Pau Cedex (FR)**

(74) Mandataire: **Cabinet Plasseraud**
**66, rue de la Chaussée d'Antin**
**75440 Paris Cedex 09 (FR)**

(56) Documents cités:
**EP-A1- 0 811 749          WO-A1-2009/097869**
**US-A1- 2004 144 545**

## Description

La présente invention concerne le domaine de l'élimination de liquides en fond de puits notamment dans le cadre de puits d'extraction de gaz.

Lors de la production de gaz naturel par les gisements, une « coproduction » d'eau ou d'hydrocarbures liquides peut également survenir. Au début de l'exploitation du gisement, le débit de gaz produit est généralement suffisamment élevé pour entraîner naturellement ces liquides vers la surface sous l'effet des efforts aérodynamiques induits.

Lorsque la production diminue, l'abaissement de la vitesse d'écoulement du gaz se traduit par une augmentation de la pression en fond de puits du fait de l'influence croissante des liquides qui « pèsent » de plus en plus sur la colonne de gaz. La présence de liquides, même s'ils sont encore entraînés par le gaz, pénalise alors sensiblement la productivité du puits d'extraction de gaz.

Par ailleurs, dès lors que le débit de gaz produit décroît en deçà d'une valeur limite, les liquides ne peuvent plus être entraînés par le gaz. Les liquides s'accumulent alors en fond de puits, ce qui conduit quasi irrémédiablement à l'arrêt de la production si une remontée artificielle (ou techniques dites d' « Artificial Lift » en anglais) n'est pas mise en oeuvre.

De manière schématique, on peut donc considérer qu'au cours de l'exploitation du gisement, l'arrivée de liquides en fond de puits, a pour effets :

- dans un premier temps, de limiter le débit de gaz produit par le puits,

- à terme, de limiter le taux de récupération de la réserve de gaz en sous-sol.

Une solution temporaire peut être d'installer des accélérateurs (ou « velocity string » en anglais) afin d'accélérer la vitesse de production du gaz et ainsi favoriser l'extraction du liquide du puits. Ces accélérateurs comprennent le plus souvent une diminution du diamètre des tubes d'extraction. Cependant, ces accélérateurs limitent la capacité de production instantanée des puits et ne sont qu'une solution temporaire.

Lorsque le débit de gaz produit par un puits ne permet plus d'entraîner les liquides vers la surface (avec ou sans accélérateur), les méthodes généralement envisagées pour reprendre la production consistent à mettre en oeuvre une technique de remontée artificielle.

Ces techniques de remontée artificielle nécessitent, le plus souvent, un apport continu d'énergie :

- soit en fond de puits :

  - énergie pneumatique (techniques dites « Gas-Lift » en anglais), éventuellement complétée par une injection de produits chimiques pour la production de mousse ou d'émulsion (techniques dites « Foam-Lift » en anglais),
  - énergie électrique (ex. pompe électrique immergée),
  - énergie hydraulique (ex. pompes hydrauliques, éjecteur liquide-liquide)

- soit en surface :

  - pompes entraînées par un moteur de surface (pompage alternatif : ou pompage continu) : ces solutions nécessitent de transférer la puissance mécanique depuis la surface vers le fond de puits,
  - abaissement de la pression de tête de puits à l'aide d'unités de compression de gaz.

Cependant, de telles méthodes de remontée artificielle ne sont pas exemptes de défauts.

Le plus souvent, ces techniques de remontée artificielle nécessitent un apport d'énergie conséquent pénalisant la rentabilité économique du puits.

De plus, les équipements nécessaires à la mise en oeuvre de ces méthodes peuvent être encombrants et peuvent nécessiter une maintenance lourde et complexe.

Quelle que soit la solution retenue, parmi celles évoquées ci-dessus, la consommation énergétique nécessaire est souvent un frein à une implantation sur des sites de production isolés.

Il y a ainsi un besoin pour limiter l'apport d'énergie extérieure nécessaire à l'élimination des liquides présents dans ces puits, et ce de manière non temporaire.

Le document US 2004/0144545 A1 propose d'utiliser une partie de l'énergie contenue dans la circulation du gaz afin d'alimenter une pompe à liquide et d'évacuer le liquide présent dans le puits vers la surface à l'aide de cette pompe. Néanmoins, cette récupération d'énergie nécessite l'installation de turbines à gaz au sein d'un puits : ces turbines à gaz doivent alors tourner de manière rapide afin de fournir suffisamment d'énergie. De plus, toute impureté contenue dans le gaz (ou transportée par le gaz) peut endommager cette turbine. Ces vitesses de rotation importantes diminuent la résistance de ces turbines et les rendent fragiles et complexes. En cas de problèmes sur ces turbines à gaz, toute maintenance est alors lourde est coûteuse.

La présente invention vient améliorer la situation.

À cet effet, la présente invention propose d'améliorer l'élimination des liquides présents en fond de puits de manière simple et économique.

La présente invention vise alors un système d'extraction des liquides d'un puits produisant du liquide et du gaz. Le système comporte :

- une paroi de séparation définissant dans une partie dudit puits au moins un premier espace et un deuxième espace,

- un séparateur liquide-gaz,

- une pompe,

- une turbine hydraulique ;

et dans lequel,

- le premier espace est apte à conduire un mélange comprenant ledit gaz et ledit liquide depuis une zone de production vers ledit séparateur,

- le séparateur est apte à séparer ledit gaz et ledit liquide dudit mélange lors d'une circulation dudit mélange depuis le premier espace,

- le deuxième espace est apte à recevoir le liquide séparé dudit mélange, le deuxième espace comprend une ouverture basse dans une première zone basse dudit puits, l'ouverture basse étant apte à permettre une circulation du liquide séparé depuis le deuxième espace vers le premier espace ;

- la turbine est apte à être mise en mouvement, sous l'effet d'une circulation gravitaire du liquide séparé ;

- la pompe est apte à être entraînée par le mouvement de ladite turbine et est apte à éliminer une quantité de liquide séparé par pompage.

Cette évacuation permet d'augmenter la production de gaz et de retarder l'arrêt de la production de ce puits par perte d'éruption naturelle.

On entend par mise en mouvement d'une turbine une rotation ou une translation selon le type de turbine considéré.

Le plus souvent la paroi de séparation est sensiblement parallèle aux parois du puits. Par exemple, la paroi peut être un tube d'une certaine hauteur placé préférentiellement au fond du puits. Ainsi le premier espace est, par exemple, l'espace annulaire formé entre les parois du puits (par exemple, le « tubing ») et ce tube. Le deuxième espace est, dans ce cas, l'espace défini par l'intérieur du tube. Bien entendu d'autres aménagements sont possibles, le premier espace conduisant le mélange de liquide et de gaz pouvant être situé à l'intérieur du tube, dans ce cas, le second espace recevant le liquide séparé est l'espace annulaire.

La paroi de séparation peut également être une paroi introduite dans le puits et séparant le puits, sur une partie, en deux demi-colonnes éventuellement symétriques (i.e. la paroi étant alors dans ce cas le long d'un diamètre du puits).

Le mélange conduit dans le premier espace peut être variable : il peut par exemple comprendre une forte proportion de gaz avec quelques gouttelettes de liquides, mais également du liquide avec quelques bulles de gaz. Ce mélange peut dépendre du puits, de son état, ou du stade d'élimination du liquide par le système.

Le séparateur est le plus souvent placé au-dessus de la zone de production, et préférentiellement en haut du premier espace, au niveau où se termine la paroi de séparation introduite. La zone de production est également appelée en français « liaison couche-trou », « zone productrice », « zone de drainage » ou encore « complétion basse (ou inférieure) » lorsque cette zone est spécifiquement équipée de tubulaires et d'accessoires conçus en fonction de la nature de la roche-réservoir et des caractéristiques rhéologiques des fluides produits, et en anglais « reservoir-wellbore interface », « pay zone » ou encore « lower completion » selon de même les circonstances. Suivant la nature de la roche-réservoir, la « liaison couche-trou » peut en effet être réalisée en perforant à plusieurs endroits la paroi du « casing », on parle alors de « perforations » ou « zone perforée », elle peut être aussi aménagée par exemple avec des crépines ou un filtre de gravier calibré de façon contrôler les venues de sable (« sand control » en anglais) entraîné lorsque le puits produit ses effluents. Cela permet d'éviter de détériorer le tubage, les pompes et autres installations aval par abrasion ou ensablement.

Le séparateur liquide-gaz peut être de différents types, par exemple « statique (ou « gravitaire ») « non activé » quand il agit uniquement par ségrégation naturelle sous l'action de la différence de poids entre le gaz et le liquide). Il peut être « dynamique non activé » quand il agit du fait de son dessin et du profil géométrique de ses composants en imprimant au mélange fluide un mouvement approprié, par exemple une rotation, il s'agit dans ce cas de séparation cyclonique ou centrifuge (ex : cyclone, vortex, hélice type « Auger », etc.). Il peut être « activé » quand il reçoit une énergie d'activation extérieure, par exemple sous forme d'un champ électrostatique ou par un entraînement mécanique qui met en mouvement, par exemple, l'un de ses composants, par exemple une hélice, un aubage ou encore une de ses parois. Ce système d'entraînement ou moteur auquel il est couplé peut être par exemple de type hydraulique et entraîné par le flux de la sortie liquide ou de la sortie gaz dudit séparateur. Ledit moteur peut être le moteur ou la turbine entraînant déjà la pompe à liquide, mais il peut être aussi un moteur dédié uniquement à l'entraînement dudit séparateur.

L'ouverture basse n'est pas nécessairement réalisée au plus bas du deuxième espace.

Le pompage peut être effectué en direction de la surface, mais il est également possible de prévoir une réinjection dans une couche inférieure, i.e. vers un réservoir dont la contre-pression est inférieure à la pression en sortie de pompe.

L'ouverture basse peut permettre une réinjection du liquide séparé dans le premier espace et ainsi autoriser une circulation du liquide sous la forme d'un cycle. Ce cycle peut s'effectuer (au moins partiellement) sensiblement verticalement, le liquide séparé descendant dans le deuxième espace et remontant dans le premier espace sous l'effet d'un entraînement par le gaz.

Dans le mode de réalisation décrit ci-dessus, la turbine est une turbine hydraulique activée par le liquide (et non une turbine à gaz). En effet, ce type de turbine est plus résistant que les turbines à gaz, qui sont généralement soumises aux risques d'abrasion par les solides et par les gouttelettes de liquide, du fait des vitesses importantes requises pour autoriser une production de puissance significative. En particulier, une turbine hydraulique peut fonctionner sous de faibles vitesses de rotation ou de faibles cadences de fonctionnement (selon qu'il s'agisse d'une turbine rotative ou d'un moteur hydraulique à piston), ce qui limite les risques de défaillance mécanique.

De nombreux entraînements de la pompe par la turbine peuvent être envisagés selon leur type respectif. L'utilisation de tiges, d'engrenages ou d'arbres de transmission moteurs peut être envisagée.

En outre, un débit de la quantité de liquide éliminée peut être inférieur d'un facteur prédéterminé à un débit de liquide mettant en mouvement ladite turbine.

Avantageusement, le système peut comporter en outre un orifice d'injection apte à permettre une injection de gaz dans une deuxième zone basse du premier espace.

Cette injection peut être réalisée éventuellement tout au bas de la zone de production du puits.

Ce gaz peut être un gaz provenant de la surface et injecté à dessein. Il peut aussi provenir d'une autre couche de roche sus-jacente ou sous-jacente le cas échéant.

La seconde zone basse peut se confondre avec la première zone basse. En tout état de cause, cet orifice d'injection peut permettre une injection efficace de gaz dans le premier espace afin de pallier le manque de circulation de gaz de production dans ce premier espace. Plus l'orifice d'injection de gaz est bas vis-à-vis de la paroi introduite pour la séparation des premier et deuxième espaces, plus l'efficacité de cette injection peut être importante. En contrepartie, sa pression doit être plus élevée pour pouvoir être injecté dans ladite zone.

Dans un mode de réalisation, le système peut comporter en outre un dispositif antiretour permettant la circulation du mélange (éventuellement uniquement) du premier espace vers le deuxième espace au travers du séparateur liquide-gaz.

Ce dispositif antiretour (ex. un clapet antiretour) peut permettre de démarrer de manière efficace le dispositif d'élimination si l'énergie potentielle de pesanteur disponible dans le second espace n'est pas suffisante pour vaincre les forces de frottements statiques de la turbine et de la pompe.

Avantageusement, le séparateur peut être un séparateur centrifuge.

Par exemple, le séparateur peut être entraîné en rotation par la rotation de la turbine.

Ainsi, la séparation du mélange en liquide-gaz peut être sensiblement améliorée. Une séparation efficace du mélange permet d'éviter (ou tout du moins de limiter fortement) toute déperdition d'énergie mécanique dans le puits lors de la remontée des gaz de production.

Dans un mode de réalisation particulier, le deuxième espace peut être situé autour du premier espace.

Ainsi, si le séparateur rejette le liquide à la périphérie de celui-ci (ex. séparateur centrifuge), il est plus simple de verser le liquide séparé dans le deuxième espace, celui-ci se situant en dessous de cette périphérie.

Avantageusement, le séparateur est situé entre la turbine et la pompe.

Ainsi, il peut être avantageux de placer la pompe à un endroit haut, par exemple au-dessus du séparateur de façon à simplifier la mise en place du dispositif.

La turbine et la pompe peuvent être reliées par une tige ou un arbre creux apte à transmettre une puissance mécanique de la turbine vers la pompe et à pomper un liquide à partir du deuxième espace.

Ainsi, cette tige creuse ou cet arbre creux peut permettre à la fois de transmettre une force ou un couple mécanique à la pompe en provenance de la turbine et à la pompe de pomper le liquide depuis un niveau proche du refoulement de la turbine, en amont de son mélange avec le gaz de production.

En outre, ladite paroi de séparation peut comprendre un tube secondaire inséré dans un tube principal, le premier espace comprenant un espace entre le tube principal et le tube secondaire, le deuxième espace comprenant un espace dans le tube secondaire.

Avantageusement, le puits peut être isolé thermiquement dans la partie du puits dans laquelle sont définies la première zone et la deuxième zone.

En effet, cette isolation thermique peut permettre de limiter les échanges thermiques entre le mélange et/ou le liquide et le sous-sol. Cette limitation peut permettre d'obtenir à la sortie du premier espace un gaz dont la température (et donc la saturation absolue en vapeur) est la plus faible possible.

Le fait de limiter la saturation en liquide du gaz sortant en partie haute du séparateur peut permettre de limiter une déperdition d'énergie du fait de la condensation de liquide lors de la remontée du gaz dans le puits.

En outre, les échanges thermiques entre le puits et l'extérieur du puits peuvent être favorisés dans une partie du puits au-dessus du premier espace et du deuxième espace.

Ainsi, le réchauffement du gaz circulant dans le puits peut alors être favorisé. Ce réchauffement (gain d'enthalpie) permet d'écarter de gaz de son point de rosée, c'est-à-dire de limiter la condensation de vapeur dans la partie supérieure du puits au contact des parois plus froides.

Un procédé d'extraction de liquide du fond d'un puits peut être en lui-même avantageux dès lors qu'il permet de favoriser la production de gaz d'un puits.

Ainsi, la présente invention vise également un procédé d'extraction des liquides d'un puits produisant du liquide et du gaz procédé d'extraction de gaz depuis un puits d'extraction produisant du gaz et du liquide, le puits comportant une paroi de séparation définissant dans une partie dudit puits un premier espace et un deuxième espace, une turbine hydraulique et une pompe, le deuxième espace comportant une ouverture basse permettant une communication entre le deuxième espace et le premier espace dans une première zone basse dudit puits.

Le procédé comporte :

- conduction dans le premier espace d'un mélange comprenant ledit gaz et ledit liquide depuis une zone de production à un séparateur liquide-gaz ;

- séparation dudit liquide et dudit gaz au sein dudit séparateur liquide-gaz ;

- conduction dudit gaz séparé dans le puits depuis le séparateur vers une zone de sortie de puits ;

- introduction dudit liquide séparé dans le deuxième espace ;

- mise en mouvement de la turbine sous l'effet d'une circulation gravitaire du liquide séparé ;

- pompage d'une quantité du liquide séparé, ledit pompage étant activé par le mouvement de ladite turbine.

Avantageusement, le procédé peut comporter en outre :

- injection de gaz dans une deuxième zone basse du premier espace.

Cette injection peut se faire, par exemple, tout au bas de la zone de production du puits.

Dans un mode de réalisation particulier, le deuxième espace comportant une ouverture basse communiquant avec un troisième espace apte à recevoir ladite quantité de liquide séparé, le troisième espace étant situé sous le deuxième espace, le troisième espace étant isolé du premier espace, le procédé peut comporter en outre :

- conduction de ladite quantité de liquide séparé dans le troisième espace au travers de l'ouverture basse.

De plus, le procédé peut comporter:

- le séparateur étant un séparateur centrifuge, mis en rotation du séparateur par la rotation de ladite turbine.

Bien entendu, la séparation peut également être effectuée via :

- une séparation statique par ségrégation gravitaire naturelle des phases légères et des phases lourdes selon leur densité respective (respectivement gaz, condensats hydrocarbures, eau) ;

- une séparation dynamique, par exemple centrifuge, cyclonique ou dans une hélice de type « Auger » ;

- une activation (motorisation) mécanique de ladite séparation dynamique lorsqu'un élément mobile dudit séparateur dynamique est entraîné au moyen d'une tige, d'un arbre ou d'autres dispositifs de transmission mécanique soit par ladite turbine mise en mouvement par ledit liquide séparé, soit par un moteur hydraulique dédié mis en mouvement par ledit liquide séparé, soit un moteur pneumatique dédié mis en mouvement par ledit gaz séparé.

D'autres caractéristiques et avantages de l'invention apparaîtront encore à la lecture de la description qui va suivre. Celle-ci est purement illustrative, et non limitative, et doit être lue en regard des dessins annexés sur lesquels :

- la figure 1a illustre une réalisation particulière de l'invention dans laquelle le dispositif d'élimination du liquide comprend une turbine et une pompe ;

- la figure 1b illustre une réalisation particulière de l'invention dans laquelle le dispositif d'élimination du liquide comprend un ancien réservoir géologique dont la production est terminée ou bien un réservoir dont la production n'est pas, pour l'instant au moins, souhaitée via ledit puits ;

- la figure 1c et 1d illustrent des variantes possibles du mode de réalisation proposé en figure 1a ;

- la figure 2 illustre une courbe de pression dans le puits dans un mode de réalisation selon l'invention ;

- la figure 3 illustre une courbe de température dans le puits dans un mode de réalisation selon l'invention ;

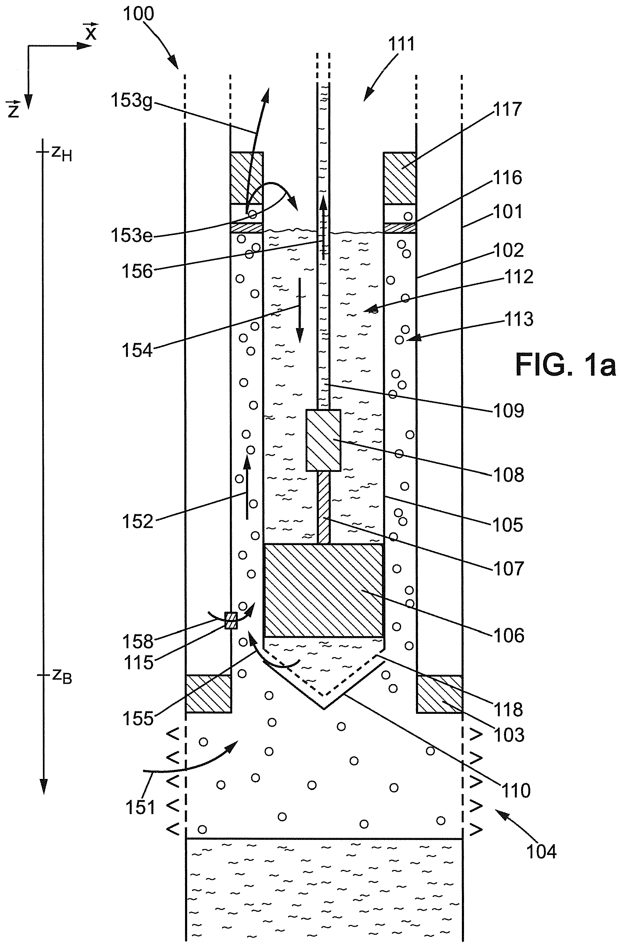

La figure 1a illustre une réalisation particulière de l'invention dans laquelle le dispositif d'élimination 100 du liquide comprend une pompe 108.

Dans cette réalisation, il est possible d'installer au fond du puits 101 un dispositif d'élimination de liquide 100 permettant d'améliorer sensiblement l'économie du puits 101, notamment pour son extraction de gaz.

Le plus souvent, le puits 101 comporte un coffrage (« cuvelage » en français ou « casing » en anglais) permettant d'isoler le puits du sous-sol. À l'intérieur de ce « casing », est installé un tube de production 102 (« tubage » en français ou « tubing » en anglais) permettant habituellement de faire circuler les fluides produits.

Afin d'éviter que les fluides produits circulent dans l'espace annulaire entre le « casing » 101 et le « tubing » 102, un joint d'isolation 103 (ou « packer » en anglais) est installé au-dessus de la zone productrice 104. Cette zone productrice 104 permet aux gaz contenus dans les sous-sols de s'introduire dans le puits.

Afin de mettre en oeuvre cette réalisation particulière de l'invention, un tube 105 est introduit dans le « tubing » 102. Le bas de ce tube 105 peut se situer aussi bien au-dessous ou au-dessus ou au même niveau que les perforations 104. Bien entendu, il est tout à fait possible que le bas du tube 102 soit plus profond que le niveau de la zone productrice 104.

Le premier espace mentionné ci-dessus comprend l'espace annulaire compris entre les tubes 102 et 105. Le deuxième espace mentionné ci-dessus comprend l'intérieur du tube 105.

La production de gaz (flèche 151) au niveau de la zone productrice 104 (par exemple, au pied du tube 105) induit un mécanisme de remontée de liquide dans l'espace annulaire formé par le tube 102 et le tube 105 (mécanisme dit de « Gas-Lift » en anglais ou même plus précisément « auto Gas-lift » si le gaz provient d'une couche naturelle de roche productrice traversée par le puits). Ainsi, un mélange formé de gaz et de liquide est entraîné vers le sommet (flèche 152) du tube 105. Ce mélange peut être majoritairement formé de gaz (i.e. mélange « à goutte ») ou majoritairement formé de liquide (i.e. mélange « à bulles »).

L'extrémité basse du tube 105 est conformée afin d'empêcher, ou tout du moins de limiter, la remontée de gaz dans le tube 105 par le bas : par exemple, un déflecteur 110 peut être positionné en bas de ce tube 105 afin de dévier le gaz remontant dans le puits (du fait du gradient vertical de pression dans le puits et/ou de la poussée d'Archimède dans le cas d'un écoulement à bulles) à l'extérieur du tube 105, entre ce tube 105 et le « tubing » 102.

Au sommet du tube 105 est installé un séparateur gaz-liquide 117. Ce séparateur est un passage obligé pour le mélange remontant dans l'espace annulaire formé par le tube 102 et le tube 105. Ainsi, le plus souvent, ce séparateur 117 est installé dans l'espace annulaire formé par le tube 102 et le tube 105. Ce séparateur 117 permet de verser (flèche 153e) le liquide contenu dans ce mélange (tout du moins une part importante de celui-ci) dans le tube 105 alors que le gaz de production est évacué (flèche 153g) verticalement (dans l'hypothèse simplificatrice où le puits est un puits vertical à cet endroit, une généralisation étant bien entendu possible) au sommet du dispositif dans le puits. Ce gaz peut contenir une légère part de liquide en suspension (gouttelettes ou vapeur), mais sans commune mesure avec la quantité initiale contenue dans le mélange, circulant dans l'espace annulaire, avant le séparateur.

Le système peut comprendre un collecteur situé au sommet du système. Ce collecteur est apte à recueillir le liquide ruisselant sur la partie interne du tube (102) et à le conduire dans le deuxième espace (112). Cette configuration permet une bonne séparation des flux descendants de liquide ruisselant et de gaz sortants du séparateur, et prévient ainsi une accumulation de liquide au-dessus du système, et la perte d'énergie associée au ré entraînement du liquide ruisselant par le gaz sortant du séparateur. Il s'ensuit une amélioration significative du rendement du système.

À cet effet, et à titre d'alternative, le séparateur 117 peut permettre également de collecter et d'orienter l'écoulement descendant de liquides ruisselant le long des parois du "tubing" 102 vers l'intérieur du tube 105. Ces liquides peuvent notamment venir de la condensation dans des zones plus froides et moins profondes du puits de la vapeur d'eau associée à la production du gaz du puits.

Le tube 105 comporte une ouverture 118 au niveau de sa section basse permettant une circulation descendante de liquide (flèche 155) entre l'espace formé par l'intérieur du tube 105 et l'extérieur de ce tube 105 au niveau du déflecteur 110.

Du fait de la pression exercée par la colonne de liquide contenu dans le tube 105, ce liquide a tendance à descendre dans le tube 105 (flèche 154) et à passer au travers de cette ouverture 118 (flèche 155). Une circulation continue de liquide est alors induite. À l'intérieur du tube 105, préférentiellement dans sa partie basse, est installée une turbine 106. Il est alors possible de récupérer une puissance mécanique sur l'arbre de la turbine 106 (ou sur la tige s'il s'agit par exemple d'un moteur hydraulique à piston(s) à mouvement alternatif) disposée dans la colonne liquide descendante et mise en mouvement du fait de cette circulation. Le mouvement de cette turbine permet d'entraîner, par la voie d'un arbre moteur (ou tige) 107 une pompe 108. Cette pompe permet lors de son fonctionnement de pomper une partie du liquide présent dans le tube 105 et de le faire remonter à la surface via un tube de remontée 109.

Le débit de liquide en circulation au sein du tube 105 peut être, par exemple, de l'ordre de 200 $m^3$/j, soit quelques litres par seconde, tandis que le débit de liquide pompé n'est que de quelques $m^3$/j. La charge hydraulique subie par la turbine est limitée à quelques dizaines ou centaines de mètres de colonne d'eau (cette charge étant limitée par la hauteur du tube 105 soit $z_B$-$z_H$), tandis que la pompe peut devoir pomper des colonnes d'eau (dans le tube de remontée 109) de plusieurs milliers de mètres.

La turbine est donc dimensionnée de manière à traiter un débit de liquide relativement important sous une faible différence de pressions, tandis que la pompe, à l'inverse, est apte à engendrer une grande différence de pressions pour un faible débit.

Il est alors possible (et peut s'avérer nécessaire dans certains cas), en fonction des caractéristiques de la turbine et de la pompe, et des débits de production de gaz et de liquide du puits de mettre en oeuvre un système de transmission de puissance hydraulique doté d'un accessoire en quelque sorte analogue à un réducteur de vitesse mécanique.

La puissance hydraulique activant la turbine, produit d'un débit relativement élevé par une différence de pressions relativement faible, est convertie le plus intégralement possible (aux rendements hydrauliques et mécaniques de la turbine, de la pompe et des accessoires de transmission près) en une puissance hydraulique délivrée par la pompe, produit d'un débit relativement faible par une différence de pressions relativement élevée.

Cette réduction de débit, s'accompagnant d'une démultiplication de la pression engendrée, découle principalement du rapport des « cylindrées » (volume de pompage ou de turbine pour un cycle) de la pompe et de la turbine (la « cylindrée » de la turbine étant généralement 50 à 100 fois supérieure à celle de la pompe).

Un tel rapport des cylindrées permet d'opérer la turbine et la pompe à vitesse (ou cadence) de fonctionnement identique. Toutefois, la mise en oeuvre d'un réducteur de vitesse mécanique entre la turbine et la pompe est également envisageable afin que la vitesse de fonctionnement de la pompe soit inférieure à celle de la turbine.

On peut souligner que le système peut s'autoréguler en fonction de la quantité de liquide associé à la production de gaz. En écoulement stationnaire, le débit de gaz produit se stabilisera pour un débit liquide dans la boucle de circulation permettant d'activer la turbine à une certaine vitesse de fonctionnement permettant elle-même d'activer la pompe pour qu'elle évacue la quantité de liquide associé au débit de gaz du puits. En d'autres termes, si le débit de la pompe induit par la vitesse de la turbine se révèle momentanément plus important que le débit de liquide de production séparée par le séparateur, alors il s'ensuivra une baisse de niveau liquide dans la colonne dans le tube 105 chargeant la turbine et par suite une baisse de la vitesse de la turbine, donc aussi de la pompe, donc du débit de liquide pompé et extrait du puits. Ce processus pouvant s'amplifier jusqu'à provoquer l'arrêt autonome de la turbine tant qu'une charge suffisante de liquide ne se soit pas reconstituée au-dessus de la turbine pour la remettre en mouvement.

L'injection de gaz de production au pied du dispositif se traduit par un allègement du mélange contenu dans l'espace annulaire formé par le tube 102 et le tube 105 comparativement au poids de la colonne de liquide dans le tube 105. Il en résulte une différence de pressions aux bornes de la turbine qui permet effectivement de transmettre une puissance mécanique au niveau de l'arbre 107 reliant les arbres respectifs d'entraînement de la turbine et de la pompe.

Compte tenu de la géométrie particulière des puits, la pompe et la turbine sont préférentiellement de type à Cavités Progressantes (ou « Progressing Cavity Pump » en anglais) également appelé type « Moineau » du nom de leur inventeur René Moineau. Néanmoins, tout autre type de pompe et de turbine pourrait être envisagé, y compris des systèmes alternatifs à pistons (parfois désignés par « HRP » pour « Hydraulic Reciprocating Pump » en anglais) comme il en existe déjà pour d'autres applications en fond de puits.

Dans ce mode de réalisation, les tubes 102 et 105 sont sensiblement coaxiaux, ce qui permet de limiter l'encombrement du dispositif. Néanmoins, ils pourraient aussi bien être sensiblement désaxés, ou encore il serait tout à fait envisageable de séparer le tube 102 en deux à l'aide d'une paroi plane s'étendant sur tout le diamètre de ce tube 102 (ou sur une ligne parallèle à un diamètre). Cette séparation en deux permet également de réserver un premier espace pour le mélange montant et un deuxième espace pour le liquide descendant.

De plus, est décrite ici une remontée du mélange en partie périphérique annulaire et une descente de liquide en partie centrale. Cependant une configuration inverse est également envisageable. Dans cette configuration inverse, il est possible d'insérer la turbine dans le premier espace.

Selon les cas d'application :

- la hauteur $(z_B-z_H)$ du dispositif 100 est, par exemple, comprise entre 50 m et 250 m, le groupe turbine est quant à lui généralement confiné sur une hauteur comprise entre 10 m et 30 m.

- la turbine traite un débit liquide compris entre 0.5 l/s et 5 l/s sous une différence de pressions motrice comprise entre 1 bar et 10 bars.

- la pompe permet d'évacuer, sur une hauteur comprise entre 500 m et 5000 m, un débit compris entre 1 m³/j et 10 m³/j.

Le dispositif constitué du tube 105 et du groupe turbine-pompe peut être descendu au travers le tube 102 de production au moyen d'un câble. Cette procédure de mise en oeuvre intervient généralement lorsque le puits a atteint sa fin de vie, c'est-à-dire lorsque le volume de liquides accumulé en fond de puits ne lui permet plus d'être éruptif.

Le dispositif 100 n'est pas nécessairement positionné à proximité de la zone de production 104, mais à une position quelconque entre la zone de production et la tête de puits. Cela est particulièrement notable dans le cas d'un puits dévié ou plus particulièrement d'un puits horizontal : il est alors préférable d'installer l'équipement au-dessus de la partie horizontale du puits, dans une partie verticale ou pseudo-verticale du puits.

Si la hauteur de liquide initialement accumulé en fond de puits est trop importante, le puits peut ne plus être éruptif au moment de la mise en oeuvre du dispositif.

Dans ce cas, il est avantageux de prévoir une vanne 115 positionnée en profondeur dans une partie basse du puits (typiquement entre la zone de production et le premier quart bas du tube 105) afin d'injecter (flèche 158) du gaz comprimé en provenance de la surface dans la partie annulaire formée par le tube 102 et le tube 105. Ce gaz est préférentiellement un gaz semblable au gaz de production ou un gaz inerte (tel que l'azote) afin de limiter les interactions avec le gaz de production.

Cette injection de gaz peut se faire également à l'aide d'un ombilical reliant la surface à cette vanne 115. Cet ombilical peut être inséré dans l'espace annulaire entre le « casing » 101 et le « tubing » 102, mais il peut également être inséré à l'intérieur du « tubing » 102 de production. Il peut aussi avoir été prévu un tel ombilical lors de la construction initiale du puits, placé le long de la paroi extérieure du « casing » 101 et pouvant avantageusement déboucher dans ce cas sous le joint « packer » 103.

La pression requise pour cette injection de gaz de démarrage ou d'appoint peut être très proche de la pression du réservoir, qui en l'occurrence est très réduite puisque le puits n'est plus naturellement éruptif. Elle est en tout cas beaucoup plus faible que celle qui serait nécessaire s'il s'agissait de faire du « Gas-lift » sur toute la profondeur du puits de façon à tenter de remonter les liquides par le tubage 102, ce qui généralement n'est pas réalisable à cause de la pression devenue trop faible du réservoir ou trop coûteux compte tenu du besoin en puissance pour fournir le gaz comprimé nécessaire.

Cette injection permet d'activer le fonctionnement du groupe turbine-pompe (106-107-108) jusqu'à ce que la hauteur de liquide accumulé en fond de puits soit suffisamment faible pour rendre le puits à nouveau éruptif. Dès lors, l'injection de gaz, en provenance de la surface, peut être interrompue et la circulation de liquide est maintenue de manière autonome en raison du débit de gaz produit par le gisement.

En phase de démarrage le débit de gaz injecté peut être faible, notamment en raison des pertes de charge dans l'ombilical dont la longueur sera pratiquement toujours supérieure à 1000 m. Dans ces conditions, l'écoulement diphasique ascendant est plutôt de type écoulement à bulles voire à poches de gaz.

En revanche, dès lors que le puits est suffisamment éruptif, l'écoulement dans la colonne ascendante comprend plutôt des bouchons ou des gouttes et des films liquides.

D'autres procédures de démarrage peuvent être envisagées dans le cas où la simple injection de gaz par la vanne 115 ne permet pas d'engendrer aux bornes de la turbine une différence de pressions suffisante pour vaincre les couples résistants au démarrage du groupe turbine-pompe.

Par exemple, il est possible de démarrer le dispositif, avec ou sans apport de gaz en fond de puits, en abaissant temporairement la pression de tête de puits. La production de gaz durant la phase temporaire d'abaissement de la pression de tête, permet d'activer le groupe turbine-pompe. Dès lors que la pompe a évacué un volume de liquide suffisant, l'abaissement de la pression de tête peut être interrompu et le puits continue de produire de manière autonome sous un niveau de pression supérieur.

De plus, il est possible de mettre en oeuvre une procédure de démarrage destinée à augmenter la différence de pressions aux bornes de la turbine, afin de faciliter son démarrage, sans abaisser de manière obligatoire la pression de tête de puits.

Cette procédure peut être envisagée lorsque le site de production ne dispose pas de système de compression de gaz. Pour la réalisation de cette procédure, des vannes antiretour 116 sont positionnées dans une zone haute de l'espace annulaire formé par le tube 102 et le tube 105. Ces vannes antiretour permettent un écoulement de fluide de l'espace annulaire formé par le tube 102 et le tube 105 vers le haut du puits en passant par le séparateur 117. Bien entendu, cette vanne antiretour se ferme automatiquement si un fluide cherche à emprunter le chemin inverse. Cette procédure peut se résumer comme suit :

- Initialement le dispositif est rempli de liquide. La hauteur totale de liquide est suffisamment importante pour que la contre-pression induite en fond de puits ne permette pas au gisement d'être éruptif.

- À l'aide d'une pompe disposée en surface, on injecte de l'eau dans le tube de remontée 109 et on impose ainsi un écoulement en sens inverse au travers de la pompe 108 au travers du tube 109. Cette injection de liquide se traduit alors par une mise en rotation du groupe turbine en sens inverse par rapport au sens de rotation normale. La pompe fonctionne alors en mode moteur/turbine.

- La turbine, qui fonctionne alors en mode pompe activée par la pompe 108, « aspire » le liquide présent dans l'espace annulaire formé par le tube 102 et le tube 105. Le clapet antiretour 116 se ferme alors et une mise en dépression de l'espace annulaire normalement ascendante se produit. L'espace ainsi dépressurisé est naturellement complété par :

  - du gaz injecté dans un ombilical d'appoint : la vanne 115 est alors ouverte (si elle existe). Dans cette hypothèse, on doit veiller à ce que la pression d'injection soit au plus égale à la pression en fond de puits afin que le gaz injecté n'ouvre pas le clapet antiretour 116.
  - du gaz de production en provenance du gisement, dans ce cas la procédure de démarrage ne nécessite pas d'apport de gaz en provenance de la surface.

- À la fin de cette phase, dite de mise en charge de la turbine, l'espace annulaire formé par le tube 102 et le tube 105 est rempli de gaz et le tube 105 est rempli de liquide. Une charge hydraulique importante est alors imposée aux bornes de la turbine.

- Lors de l'arrêt de la pompe installée en surface et de la mise à pression atmosphérique (ou plus généralement lors de la mise à une pression basse prédéterminée et propre à l'exploitation) de l'extrémité du tube 109 en surface, le couple moteur fourni par la pompe 108 est annulé et la colonne de liquide stockée dans le tube 105 se décharge alors au travers de la turbine.

- Une fois les couples résistants au démarrage vaincus (i.e. les forces de frottements statiques i.e. d'adhérence), l'appoint de gaz peut permettre (si nécessaire) de maintenir la circulation de liquide dans le système, et donc le pompage progressif des liquides accumulés en fond de puits jusqu'à ce que le gisement redevienne éruptif.

Dans l'hypothèse où aucun ombilical ou autre source de gaz d'appoint ne soit disponible pour permettre d'injecter un gaz d'appoint via la vanne 115 (qui n'existe alors pas), il est possible de répéter les cycles de chargement - déchargement de la turbine comme décrit précédemment jusqu'à ce que le volume de liquide évacué vers la surface soit suffisant pour rendre le puits éruptif. On peut aussi envisager d'utiliser le tube 109 pour y injecter du gaz comprimé depuis la surface. L'avantage par rapport à l'utilisation de liquide est que pour chaque cycle d'injection puis décompression réalisée afin de remettre le puits en production, on diminue plus vite l'inventaire global de liquides présents dans le fond de puits et qui sont la cause de la perte d'éruptivité naturelle.

Le pompage via la ligne 109 n'est pas nécessairement réalisé jusqu'à la surface. Il est également possible de pomper le liquide jusqu'à une zone du sous-sol apte à accumuler du liquide. Cette zone peut être un ancien réservoir ou un puits inutilisé situé au-dessus ou en dessous de la zone 104 en cours d'exploitation.

La boucle de circulation équipée d'une turbine hydraulique permet ainsi de convertir notamment la puissance de détente du gaz et/ou la puissance d'évacuation des gaz de la complétion. Cette solution est plus particulièrement adaptée à une application en fond de puits, où les contraintes d'encombrement et la présence de liquides notamment rendent pratiquement impossible l'usage d'une turbine à gaz pour détendre directement le gaz et activer la pompe assurant l'évacuation des liquides.

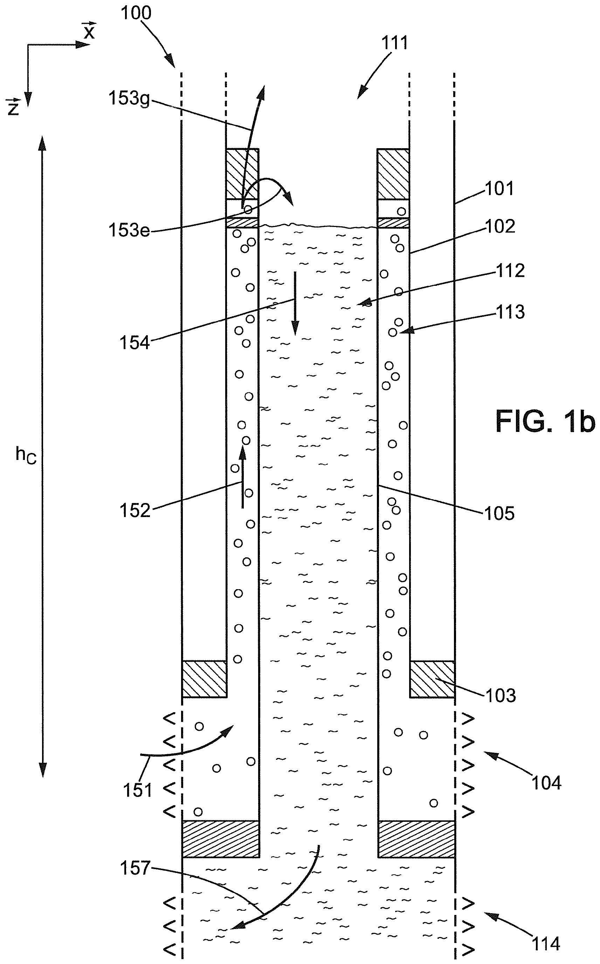

La figure 1b illustre une réalisation particulière de l'invention dans laquelle le dispositif d'élimination du liquide comprend un ancien réservoir dont la production est terminée.

En effet, l'utilisation d'une turbine n'est pas l'unique solution permettant d'exploiter l'énergie potentielle de pesanteur du liquide présent dans le tube 105 afin d'éliminer ce liquide du puits.

S'il existe, sous le réservoir en cours d'exploitation un autre réservoir différent et déconnecté du niveau en cours de production, il peut être possible de l'utiliser afin d'injecter le liquide contenu dans le tube 105. Ce réservoir peut avoir une pression de réinjection inférieure à la pression hydrostatique maximale de la colonne de liquide contenue dans le tube 105 (par exemple inférieure ou égale à 15 bars environ dans le cas d'un dispositif de 150 m de hauteur $h_c$).

La réinjection est alors possible grâce à la génération d'une simple charge hydraulique (i.e. utilisation de l'énergie potentielle de pesanteur du liquide présent dans le tube 105) sans mettre en oeuvre de composant hydraulique de puissance.

Toute autre application requérant une source d'énergie en fond de puits pouvant être fournie par cette énergie potentielle de pesanteur ou charge hydraulique est possible.

Le groupe turbine-pompe décrit ci-avant peut également être utilisé pour réinjecter les liquides dans le réservoir inférieur si la charge hydraulique disponible dans la colonne descendante n'est pas suffisamment élevée. Dans ce cas, la pompe 108 de la figure 1a peut se trouver sous la turbine 106. Le refoulement de la pompe par le tube 109 s'effectue en direction du fond de puits plutôt que vers la surface.

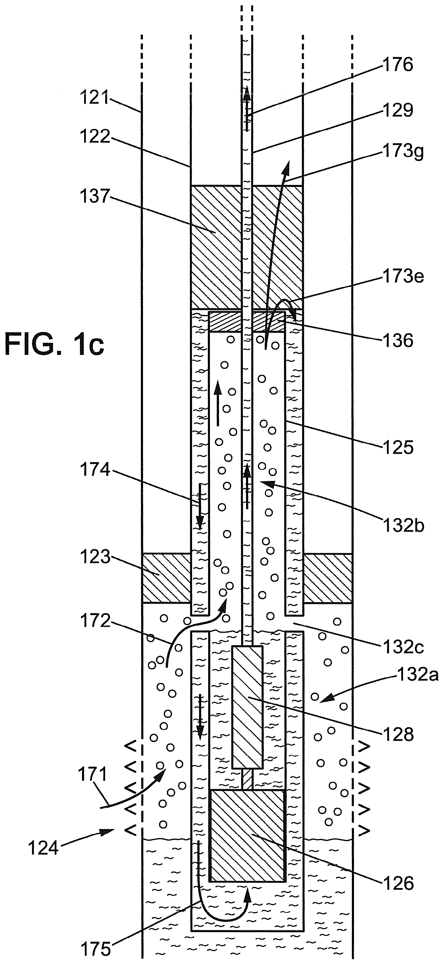

La figure 1c présente une variante possible du mode de réalisation de la figure 1a.

Dans ce mode de réalisation, le puits comporte de la même façon un coffrage 121 (ou « casing » en anglais). À l'intérieur de ce « casing », est installé un tube de production 122 (ou « tubing » en anglais).

Afin d'éviter que les fluides produits ne circulent dans l'espace annulaire entre le « casing » 121 et le « tubing » 122, un joint d'isolation 123 (ou « packer » en anglais) est installé au-dessus de la zone productrice 124. La « liaison couche-trou » 124, réalisée par exemple au moyen de perforations de la paroi du « casing » 121, permet aux fluides contenus dans la couche productrice du sous-sol de s'introduire dans le puits.

L'extrémité basse de ce « tubing » 122 est fermée de manière étanche afin de limiter tout écoulement de fluide à ce niveau.

Un tube 125 est introduit dans le « tubing » 122.

De plus, des tubes 132c sont installés sur le dispositif afin de relier des ouvertures correspondantes réalisées sur les tubes 122 et 125. Ces tubes permettent ainsi un écoulement de fluides de l'espace 132a vers l'espace 132b, sans permettre un écoulement direct de fluides de l'espace 132a vers l'espace annulaire entre les tubes 122 et 125. Il peut exister un ou plusieurs tubes 132c sur le dispositif. Bien entendu, l'écoulement de liquide dans l'espace annulaire formé entre les tubes 122 et 125 reste possible, en contournant ces tubes 132c.

Le premier espace mentionné ci-dessus comprend l'espace 132a, 132b et 132c. Le deuxième espace mentionné ci-dessus comprend l'espace annulaire formé entre les tubes 122 et 125.

La production du gaz (flèche 171) au niveau de la zone productrice 104 induit une remontée de liquide dans l'espace 132a puis dans l'espace 132c (flèche 172), puis enfin dans l'espace 132b.

Au sommet du tube 125 est installé un séparateur gaz-liquide 137. Ce séparateur est un passage obligé pour le mélange remontant de l'espace 132b. Ce séparateur peut être un séparateur statique ou avantageusement un séparateur dynamique, par exemple centrifuge. Le cas échéant, le séparateur peut être un séparateur activé. Il peut par exemple un séparateur centrifuge mis en rotation par le déplacement vertical du mélange ou par le débit de gaz séparé ou par le débit de liquide séparé ou il peut également être mis en rotation par un système extérieur (moteur électrique, couple mécanique externe, etc.). Ce séparateur centrifuge peut avoir pour effet de rejeter le liquide (flèches 173e) par centrifugation contre les parois du tube 122, liquide qui s'écoulera alors dans l'espace annulaire formé par les tubes 122 et 125. Ainsi, le fait que le deuxième espace soit situé à la périphérie du premier espace peut être avantageux afin de collecter le liquide centrifugé de manière simple.

Des vannes antiretour 136 peuvent être positionnées dans une zone haute de l'espace annulaire formé par le tube 122 et le tube 125. Ces vannes antiretour permettent un écoulement de fluide de l'espace annulaire formé par le tube 122 et le tube 125 vers le haut du puits en passant par le séparateur 137. Bien entendu, ces vannes antiretour se ferment automatiquement si un fluide cherche à emprunter le chemin inverse.

Le gaz de production est évacué (flèche 173g) au sommet du dispositif dans le puits.

Du fait de la pression exercée par la colonne de liquide contenue l'espace annulaire formé par les tubes 122 et 125, ce liquide a tendance à descendre cet espace annulaire (flèche 174) et à circuler vers l'intérieur du tube 125 (flèche 175) grâce à l'ouverture de ce tube 125 dans sa partie basse.

À l'intérieur du tube 125, préférentiellement dans sa partie basse, est installée une turbine 126. De plus, du fait de l'arrivée du liquide sur la turbine par son extrémité inférieure, la poussée axiale appliquée par le liquide sur la turbine tend à compenser la poussée axiale appliquée par le liquide sur la pompe.

Il est alors possible de récupérer une puissance mécanique sur l'arbre de la turbine 126 mise en mouvement du fait de cette circulation. Le mouvement de cette turbine permet d'entraîner, par la voie d'un arbre moteur ou d'une tige une pompe 128. Cette pompe permet lors de son fonctionnement de pomper une fraction du liquide présent au niveau de cette pompe et de la faire remonter vers la surface via un tube de remontée 129 de manière similaire à ce qui est présenté dans les autres modes de réalisation.

Le liquide remontant dans le tube 125 pourrait avoir tendance à pénétrer dans les tubes 132c lors de sa remontée. Cependant, les vitesses de l'écoulement de fluides circulant depuis l'espace 132a vers l'espace 132b sont telles que ce liquide est « soufflé » et emporté dans le mélange vers le haut du tube 125.

Il est également possible de prévoir un système d'injection de gaz comme proposé en relation avec la figure 1a.

La pompe et la turbine sont préférentiellement de type à « Cavités Progressantes ». Néanmoins, des pompes et de turbines de tout autre type peuvent être utilisées, y compris des systèmes alternatifs à pistons comme il en existe déjà pour d'autres applications en fond de puits.

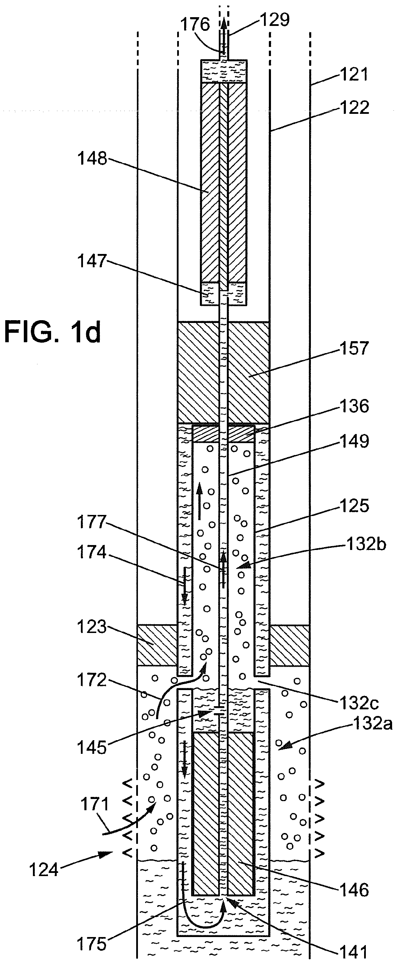

La figure 1d présente une variante possible du mode de réalisation de la figure 1a ou de la figure 1c.

Dans ce mode de réalisation, la pompe 148 est située au-dessus du séparateur 157 et de la turbine 146. Ainsi, ce mode de réalisation permet d'éviter de positionner la pompe au sein du deuxième espace et de faciliter la mise en place du dispositif d'élimination de liquide.

De plus, si la pompe 148 a un problème (possible du fait que cette pompe est soumise à une forte différence de pression), il peut être plus aisé d'y accéder en premier pour la remplacer sans devoir remonter l'intégralité du système décrit.

Pour activer la pompe, il est possible de prévoir un arbre moteur 149 reliant la turbine au moteur, cet arbre moteur étant creux afin de permettre à un fluide liquide de circuler dedans. Ainsi, la pompe entraînée par la turbine crée une dépression à l'aval de la turbine, un liquide étant alors entraîné dans le tube 149 vers le haut.

Le tube de pompage 129 au-dessus de la pompe 148 (et évacuant le liquide vers la surface (flèche 176) ou vers un autre réservoir) n'est pas nécessairement en rotation durant le pompage : seul le tube 149 est en rotation afin de transmettre le couple moteur.

Il est également possible de profiter de la rotation de l'arbre moteur 149 pour conférer un mouvement de rotation au séparateur centrifuge 157.

Le volume 147 situé sous la pompe 148 permet de transférer les liquides aspirés dans la tige creuse 149 vers l'aspiration de la pompe 148. Ce transfert se fait grâce à des trous pratiqués dans la tige 149. Le volume 147assure l'étanchéité entre le corps de la pompe 148, la tige creuse 149 en rotation et l'espace annulaire entre la pompe 148 et le tube 122.

L'alimentation du volume 147 (flèche 177) peut se faire depuis le point de soutirage 145 (situé entre le refoulement de la turbine et l'espace 132c) via la tige creuse 149 et des trous pratiqués dans cette tige. Un point de soutirage peut également, en complément ou en variante, être situé tout en bas de la tige creuse (point 141).

Bien que ne figurant pas sur la figure 1d, cette version du système peut être encore améliorée par un collecteur de liquide situé au-dessus de la pompe 148. Ce collecteur laisserait la production de gaz s'évacuer au sommet du dispositif dans le puits, mais collecterait le ruissellement de liquide le long des parois du tube 122. Ce liquide s'écoulerait par une conduite ad-hoc située dans l'espace entre la pompe 148 et le tube 122, jusqu'au volume 147. Le liquide serait alors pompable par la pompe 148.

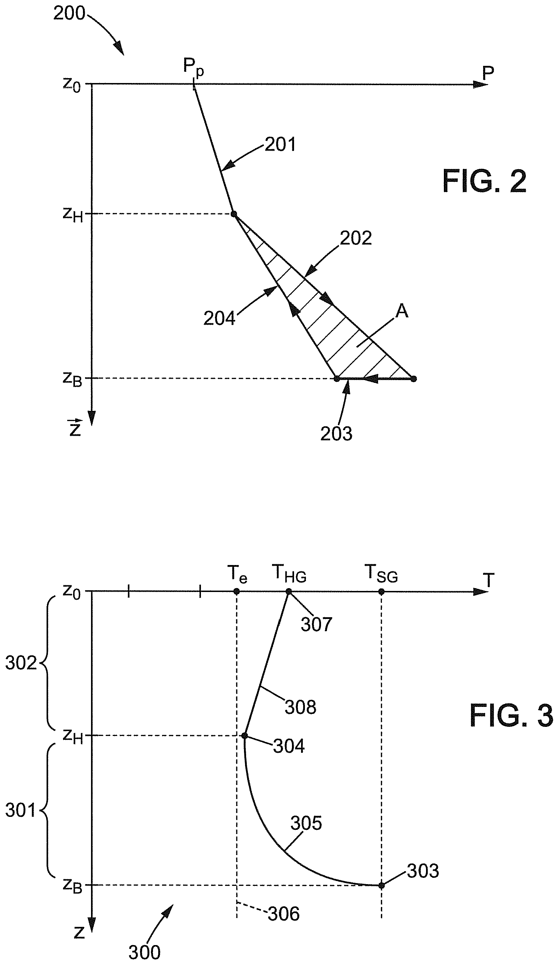

La figure 2 illustre une courbe de pression dans le puits dans le mode de réalisation décrit en relation avec la figure 1a.

La pression $P_p$ est la pression du gaz en tête de puits (cote $z_0$). La courbe 201 montre une légère augmentation de la pression pendant la descente dans le puits, la pente correspond principalement au gradient de pression hydrostatique du gaz en écoulement dans le puits (avec éventuellement quelques gouttelettes de liquides entraînées par ce gaz).

À la cote $z_H$, se trouve le début du dispositif d'élimination du liquide tel que décrit précédemment (i.e. le haut du tube 105 de la figure 1a). La courbe 202 décrit la pression au sein du tube 105 rempli de liquide : la pente de cette courbe correspond principalement au gradient de pression hydrostatique et au gradient de pertes de charge par frottements au sein de ce tube 105. La courbe 204 décrit la pression au sein de l'espace annulaire formé par le tube 102 et le tube 105 : cet espace étant rempli d'un mélange liquide-gaz, la pente de cette courbe correspond principalement au gradient pression hydrostatique et au gradient de pertes de charge par frottements de ce mélange. Bien entendu la pente de cette courbe 204 (variation de pression sur variation de hauteur) est plus faible que la pente de la courbe 202, car la densité du mélange est plus faible que la densité du liquide « pur » (i.e. sans gaz).

Le point de cote $z_B$ correspond à un point en bas du tube 105.

La courbe 203 représente la différence de pression disponible aux bornes de la turbine, qui serait dans ce cas positionnée au pied du dispositif, ou disponible pour une réinjection des liquides dans un réservoir déplété.

Les courbes 204, 202 et 203 forment un cycle et suivent la circulation décrite précédemment, dans le cas particulier où le dispositif est équipé d'une turbine. Par analogie avec un cycle moteur, il est possible de visualiser le fait que la circulation décrite précédemment produit un travail W (sensiblement proportionnel à l'aire A du triangle dont les arêtes sont 202, 203 et 204, les surfaces des sections de l'espace annulaire et du tube pouvant rentrer en considération), ce dernier étant maximal si le mélange remontant dans l'espace annulaire formé par le tube 102 et le tube 105 est pauvre en liquide et si le fluide descendant dans le tube 105 est pauvre en gaz, c'est-à-dire si le différentiel de pression entre l'espace annulaire et l'intérieur du tube est grand.

Le travail produit par un tel dispositif peut être légèrement inférieur à ce travail théorique, car des dissipations énergétiques internes au fluide transporté peuvent survenir.

En tout état de cause, il est également possible de constater que la pression aux bornes de la turbine permet la mise en mouvement de celle-ci.

La figure 3 illustre une courbe de température dans le puits dans un mode de réalisation selon l'invention.

Le procédé décrit sur la figure 1a peut être assimilé à un processus de détente d'un gaz au travers d'une turbine à gaz. Dans le cas de la figure 1a, la puissance de détente du gaz est tout d'abord transmise au liquide, qui s'élève dans le premier espace, puis est exploitée par la turbine dont l'arbre délivre une puissance mécanique.

L'application du principe de conservation de l'énergie à une telle transformation thermodynamique montre que cette détente s'accompagne d'un abaissement de la température du gaz. Dans le cas d'un gaz parfait, le rapport des températures aux bornes d'une turbine à gaz serait tel que : $\dfrac{T_2}{T_1} = \dfrac{p_2}{p_1}^{\frac{\gamma - 1}{\gamma}}$ dans lequel y est l'exposant isentropique du gaz et $\dfrac{p_2}{p_1}$ est le taux de détente du gaz, i.e. rapport des pressions aux bornes de la turbine.

Il est possible de constater que le procédé décrit permet de refroidir le gaz produit.

Dans certains cas particuliers, ce refroidissement pourrait s'accompagner d'une condensation partielle de la vapeur véhiculée par le gaz. Forcer un assèchement du gaz, par condensation, en fond de puits, permettrait alors de limiter l'apparition de condensats le long du puits, et la pénalisation de la productivité du puits qui en résulte (la présence de condensats liquides le long du puits augmentant significativement la pression à vaincre par le gaz en fond de puits pour s'écouler naturellement vers la surface).

Lors de son élévation dans l'espace annulaire formé par le tube 102 et le tube 105, le gaz se détend en raison du gradient de pression principalement imposé par la présence du liquide. Le travail de détente du gaz est alors partiellement transmis au liquide.

Les transferts de chaleur étant relativement efficaces entre le liquide et le gaz dans l'espace annulaire et la capacité thermique de l'écoulement liquide étant grande par rapport à celle du gaz, le liquide impose, en régime établi, sa température au gaz sensiblement sur toute la hauteur de l'espace annulaire.

On constate alors que le volume de liquide circulant dans la boucle converge vers une situation thermodynamique d'équilibre dans laquelle sa température $T_e$ est stabilisée à une valeur inférieure à la température du gaz produit $T_{SG}$ par le gisement.

Ainsi, si la température du gaz est $T_{SG}$ au niveau de son extraction (cote $z_B$), sa température diminue rapidement (courbe 305) dans la zone 301 (i.e. la zone correspondant à l'espace annulaire comprise entre les cotes $z_B$ et $z_H$) pour converger vers la température de l'eau d'équilibre $T_e$. Au point 304, c'est-à-dire à la sortie de l'espace annulaire, le gaz pénètre donc dans le puits (hors dispositif 100) à une température proche de $T_e$.

Dans la zone 301, les transferts de chaleur avec le terrain environnant, qui tendraient à réchauffer le liquide, peuvent avantageusement être limités (par exemple via une isolation thermique du puits entre le « casing » et le « tubing ») ou bien entre « le casing » et la couche de terrain naturel.

Lors de sa remontée dans le puits (zone 302 comprise en la cote $z_H$ et la cote $z_0$), le gaz se réchauffe progressivement du fait des échanges thermiques avec le sous-sol jusqu'à la tête de puits (point 307).

Bien entendu, la présente invention ne se limite pas aux formes de réalisation décrites ci-avant à titre d'exemple ; elle s'étend à d'autres variantes.

D'autres réalisations sont possibles.

Par exemple, le puits et les différents tubes sont décrits comme étant de sections circulaires, mais d'autres sections comme des sections ovales sont possibles.

**Revendications**

1. Système d'extraction de liquide d'un puits produisant du liquide et/ou du gaz, dans lequel le système comporte :

   - une paroi de séparation (105) définissant dans une partie dudit puits au moins un premier espace (113) et un deuxième espace (112),
   - un séparateur liquide-gaz (117),
   - une pompe (108),
   - une turbine hydraulique (106) ;

   et dans lequel,

   - le premier espace (113) est apte à conduire un mélange comprenant ledit gaz et ledit liquide depuis une zone de production (104) vers ledit séparateur (117),
   - le séparateur (117) est apte à séparer ledit gaz et ledit liquide dudit mélange lors d'une circulation dudit mélange depuis le premier espace,
   - le deuxième espace (112) est apte à recevoir le liquide séparé dudit mélange, le deuxième espace comprend une ouverture basse dans une première zone basse dudit puits, l'ouverture basse étant apte à permettre une circulation du liquide séparé depuis le deuxième espace vers le premier espace ;

   **caractérisé en ce que** :

   - la turbine est apte à être mise en mouvement sous l'effet d'une circulation gravitaire du liquide séparé ;
   - la pompe est apte à être entraînée par le mouvement de ladite turbine et est apte à éliminer une quantité de liquide séparé par pompage.

2. Système selon la revendication 1, dans lequel un débit de la quantité de liquide éliminée est inférieur d'un facteur prédéterminé à un débit mettant en mouvement ladite turbine.

3. Système selon l'une des revendications précédentes, dans lequel le système comprend en outre un collecteur situé au sommet du système et apte à recueillir un liquide ruisselant sur une partie interne du tube (102, 122) et à le conduire dans le deuxième espace (112).

4. Système selon l'une des revendications précédentes, dans lequel le système comporte en outre un orifice d'injection apte à permettre une injection de gaz dans une deuxième zone basse du premier espace.

5. Système selon l'une des revendications précédentes, dans lequel le système comporte en outre un dispositif anti-retour permettant la circulation du mélange du premier espace vers le deuxième espace au travers du séparateur liquide-gaz.

6. Système selon l'une des revendications précédentes, dans lequel le séparateur est un séparateur centrifuge ou un séparateur cyclonique ou un séparateur vortex ou un séparateur Auger.

7. Système selon la revendication 6, dans lequel le séparateur est entraîné en rotation par le mouvement de la turbine et/ou par le mouvement d'un moteur auxiliaire.

8. Système selon l'une des revendications précédentes, dans lequel le deuxième espace est situé autour du premier espace.

9. Système selon l'une des revendications précédentes, dans lequel le séparateur est situé entre la turbine et la pompe.

10. Système selon la revendication 6, dans lequel la turbine et la pompe sont reliées par un arbre creux apte à transmettre une puissance mécanique de la turbine vers la pompe et à pomper un liquide à partir du deuxième espace.

11. Système selon l'une des revendications précédentes, dans lequel ladite paroi de séparation comprend un tube secondaire inséré dans un tube principal, le premier espace comprenant un espace entre le tube principal et le tube secondaire, le deuxième espace comprenant un espace dans le tube secondaire.

12. Système selon l'une des revendications précédentes, dans lequel le puits est isolé thermiquement dans la partie du puits dans laquelle sont définis le premier espace et le deuxième espace.

**13.** Système selon l'une des revendications précédentes, dans lequel les échanges thermiques entre le puits et l'extérieur du puits sont favorisés dans une partie du puits au-dessus du premier espace et du deuxième espace.

**14.** Procédé d'extraction de gaz depuis un puits d'extraction produisant du gaz et/ou du liquide, le puits comportant une paroi de séparation définissant dans une partie dudit puits un premier espace et un deuxième espace, une turbine hydraulique et une pompe, le deuxième espace comportant une ouverture basse permettant une communication entre le deuxième espace et le premier espace dans une première zone basse dudit puits,
dans lequel le procédé comporte :

- conduction (152) dans le premier espace (113) d'un mélange comprenant ledit gaz et ledit liquide depuis une zone de production (104) à un séparateur liquide-gaz (117) ;
- séparation dudit liquide et dudit gaz au sein dudit séparateur liquide-gaz ;
- conduction (153g) dudit gaz séparé dans le puits depuis le séparateur vers une zone de sortie de puits ;
- introduction (153e) dudit liquide séparé dans le deuxième espace ;

**caractérisé en ce que** le procédé comporte en outre :

- mise en mouvement de la turbine sous l'effet d'une circulation gravitaire (154) du liquide séparé ;
- pompage (156) d'une quantité du liquide séparé, ledit pompage étant activé par la mise en mouvement de ladite turbine.

**15.** Procédé selon la revendication 14, dans lequel le procédé comporte en outre :

- injection (158) de gaz dans une deuxième zone basse du premier espace.

**16.** Procédé selon l'une des revendications 14 ou 15, dans lequel le deuxième espace comportant une ouverture basse communiquant avec un troisième espace apte à recevoir ladite quantité de liquide séparé, le troisième espace étant situé sous le deuxième espace, le troisième espace étant isolé du premier espace, le procédé comporte en outre :

- conduction de ladite quantité de liquide séparé dans le troisième espace au travers de l'ouverture basse.

**17.** Procédé selon l'une des revendications 14 à 16, dans lequel le procédé comporte en outre :

- le séparateur étant un séparateur centrifuge, mise en rotation du séparateur par la rotation de ladite turbine.

**Patentansprüche**

**1.** System zum Gewinnen von Flüssigkeit aus einem Flüssigkeit und/oder Gas produzierenden Schacht, wobei das System aufweist:

- eine Trennwand (105), die in einem Teil des Schachts mindestens einen ersten Raum (113) und einen zweiten Raum (112) definiert,
- einen Flüssigkeit-Gas-Separator (117),
- eine Pumpe (108),
- eine Hydraulikturbine (106);

und wobei

- der erste Raum (113) geeignet ist, ein Gemisch, das das Gas und die Flüssigkeit aufweist, von einer Produktionszone (104) zu dem Separator (117) zu führen,
- der Separator (117) geeignet ist, das Gas und die Flüssigkeit des Gemisches zu trennen, wenn das Gemisch aus dem ersten Raum strömt,
- der zweite Raum (112) geeignet ist, die von dem Gemisch abgetrennte Flüssigkeit zu empfangen, wobei der zweite Raum eine untere Öffnung in einer ersten unteren Zone des Schachts aufweist, wobei die untere Öffnung geeignet ist, ein Strömen der abgetrennten Flüssigkeit von dem zweiten Raum zu dem ersten Raum zu erlauben;

**dadurch gekennzeichnet, dass**

- die Turbine geeignet ist, unter der Wirkung eines Gravitationsstroms der abgetrennten Flüssigkeit in Gang gesetzt zu werden;
- die Pumpe geeignet ist, von der Bewegung der Turbine angetrieben zu werden, und geeignet ist, durch Pumpen eine Menge der abgetrennten Flüssigkeit zu beseitigen.

**2.** System nach Anspruch 1, in welchem ein Durchsatz der beseitigten Flüssigkeitsmenge um einen vorgegebenen Faktor kleiner ist als ein Durchsatz, der die Turbine in Gang setzt.

**3.** System nach einem der vorstehenden Ansprüche, in welchem das System ferner einen Sammler aufweist, der oben an dem System angeordnet ist und geeignet ist, eine an einem Innenteil des Rohrs (102, 122) herabrinnende Flüssigkeit aufzufangen und sie in den zweiten Raum (112) zu führen.

**4.** System nach einem der vorstehenden Ansprüche, in welchem das System ferner eine Injektionsöffnung aufweist, die geeignet ist, eine Injektion von Gas in eine zweite untere Zone des ersten Raums zu erlauben.

**5.** System nach einem der vorstehenden Ansprüche, in welchem das System ferner eine Rückstromverhinderungsvorrichtung aufweist, die ein Strömen des Gemisches von dem ersten Raum über den Flüssigkeit-Gas-Separator zu dem zweiten Raum erlaubt.

**6.** System nach einem der vorstehenden Ansprüche, in welchem der Separator ein Zentrifugalseparator oder ein Zyklonseparator oder ein Wirbelseparator oder ein Auger-Separator ist.

**7.** System nach Anspruch 6, in welchem der Separator durch die Bewegung der Turbine und/oder durch die Bewegung eines Hilfsmotors in Drehung versetzt wird.

**8.** System nach einem der vorstehenden Ansprüche, in welchem der zweite Raum um den ersten Raum herum angeordnet ist.

**9.** System nach einem der vorstehenden Ansprüche, in welchem der Separator zwischen der Turbine und der Pumpe angeordnet ist.

**10.** System nach Anspruch 6, in welchem die Turbine und die Pumpe über eine Hohlspindel miteinander verbunden sind, die geeignet ist, eine mechanische Energie der Turbine zur Pumpe zu übertragen und eine Flüssigkeit aus dem zweiten Raum zu pumpen.

**11.** System nach einem der vorstehenden Ansprüche, in welchem die Trennwand ein in ein Hauptrohr eingesetztes sekundäres Rohr aufweist, wobei der erste Raum einen Raum zwischen dem Hauptrohr und dem sekundären Rohr aufweist und der zweite Raum einen Raum in dem sekundären Raum aufweist.

**12.** System nach einem der vorstehenden Ansprüche, in welchem in dem Teil des Schachts, in welchem der erste Raum und der zweite Raum definiert sind, der Schacht thermisch isoliert ist.

**13.** System nach einem der vorstehenden Ansprüche, in welchem in einem Teil des Schachts oberhalb des ersten Raums und des zweiten Raums ein Wärmeaustausch zwischen dem Schacht und der äußeren Umgebung des Schachts begünstigt ist.

**14.** Verfahren zur Gewinnung von Gas aus einem Förderschacht, der Gas und/oder Flüssigkeit produziert, wobei der Schacht eine Trennwand, die in einem Teil des Schachts einen ersten Raum und einen zweiten Raum definiert, eine Hydraulikturbine und eine Pumpe aufweist, wobei der zweite Raum eine untere Öffnung aufweist, die in einer ersten unteren Zone des Schachts eine Verbindung zwischen dem zweiten Raum und dem ersten Raum erlaubt, wobei das Verfahren aufweist:

- Führen (152) eines Gemisches, das das Gas und die Flüssigkeit aufweist, in dem ersten Raum von einer Produktionszone (104) zu einem Flüssigkeit-Gas-Separator (117);
- Trennen der Flüssigkeit und des Gases in dem Flüssigkeit-Gas-Separator;
- Führen (153g) des abgetrennten Gases in dem Schacht von dem Separator zu einer Schachtausgangszone;
- Einleiten (153e) der abgetrennten Flüssigkeit in den zweiten Raum;

**dadurch gekennzeichnet, dass** das Verfahren ferner aufweist:

- Ingangsetzen der Turbine unter der Wirkung eines Gravitationsstroms (154) der abgetrennten Flüssigkeit;
- Pumpen (156) einer Menge der abgetrennten Flüssigkeit, wobei das Pumpen von dem Ingangsetzen der Turbine angetrieben wird.

**15.** Verfahren nach Anspruch 14, in welchem das Verfahren ferner aufweist:

- Injizieren (158) von Gas in eine zweite untere Zone des ersten Raums.

**16.** Verfahren nach einem der Ansprüche 14 oder 15, in welchem der zweite Raum eine untere Öffnung aufweist, die in Verbindung zu einem dritten Raum steht, der geeignet ist, die Menge der abgetrennten Flüssigkeit zu empfangen, wobei der dritte Raum unterhalb des zweiten Raums angeordnet ist und der dritte Raum von dem ersten Raum isoliert ist, wobei das Verfahren ferner aufweist:

- Führen der Menge der abgetrennten Flüssigkeit über die untere Öffnung in den dritten Raum.

**17.** Verfahren nach einem der Ansprüche 14 bis 16, wobei das Verfahren ferner aufweist:

- Versetzen des Separators in Rotation durch die Rotation der Turbine, wobei der Separator ein Zentrifugalseparator ist.

## Claims

1. System for extracting liquid from a well producing liquid and/or gas,
   wherein the system comprises:

   - a separation wall (105) defining in a portion of said well at least one first space (113) and a second space (112),
   - a liquid-gas separator (117),
   - a pump (108),
   - a hydraulic turbine (106);

   and wherein,

   - the first space (113) is suitable for conveying a mixture comprising said gas and said liquid from a production area (104) to said separator (117),
   - the separator (117) is suitable for separating said gas and said liquid from said mixture during a circulation of said mixture from the first space,
   - the second space (112) is suitable for receiving the liquid separated from said mixture, the second space comprises a bottom opening in a first bottom area of said well, the bottom opening being suitable for allowing a circulation of the separated liquid from the second space to the first space;
   - the turbine is suitable for being set into movement under the effect of a circulation gravitation of the separated liquid;
   - the pump is suitable for being driven by the movement of said turbine and is suitable for eliminating a quantity of separated liquid by pumping.

2. System according to claim 1, wherein a flow rate of the quantity of eliminated liquid is less than a predetermined factor at a flow rate that puts said turbine into movement.

3. System according to one of the preceding claims, wherein the system further comprises a collector located at the top of the system and suitable for collecting a liquid streaming on an internal portion of the tube (102, 122) and in conveying it into the second space (112).

4. System according to one of the preceding claims, wherein the system further comprises an injection orifice able to allow for an injection of gas into a second bottom area of the first space.

5. System according to one of the preceding claims, wherein the system further comprises an anti-backflow device allowing for the circulation of the mixture from the first space to the second space through the liquid-gas separator.

6. System according to one of the preceding claims, wherein the separator is a centrifugal separator or a cyclone separator or a vortex separator or an Auger separator.

7. System according to claim 6, wherein the separator is driven in rotation by the movement of the turbine and/or by the movement of an auxiliary engine.

8. System according to one of the preceding claims, wherein the second space is located around the first space.

9. System according to one of the preceding claims, wherein the separator is located between the turbine and the pump.

10. System according to claim 6, wherein the turbine and the pump are connected by a hollow shaft suitable for transmitting a mechanical power from the turbine to the pump and for pumping a liquid from the second space.

11. System according to one of the preceding claims, wherein said separation wall comprises a secondary tube inserted into a main tube, with the first space comprising a space between the main tube and the secondary tube, with the second space comprising a space in the secondary tube.

12. System according to one of the preceding claims, wherein the well is thermally insulated in the portion of the well wherein the first space and the second space are defined.

13. System according to one of the preceding claims, wherein the thermal exchanges between the well and the outside of the well are favoured in a portion of the well above the first space and the second space.

14. Method for extracting gas from an extraction well producing gas and/or liquid, with the well comprising a separation wall defining in a portion of said well a first space and a second space, a hydraulic turbine and a pump, the second space comprising a bottom opening allowing for a communication between the second space and the first space in a first bottom area of said well,
    wherein the method comprises:

    - conveyance (152) in the first space (113) of a mixture comprising said gas and said liquid from a production area (104) to a liquid-gas separator (117);
    - separation of said liquid and of said gas within said liquid-gas separator;
- conveyance (153g) of said separated gas in the well from the separator to a well output area;
- introduction (153e) of said separated liquid into the second space;
- setting into movement of the turbine under the effect of a gravitation circulation (154) of the separated liquid;
- pumping (156) of a quantity of the separated liquid, said pumping being activated by the putting into movement of said turbine.

15. Method according to claim 14, wherein the method further comprises:

- injection (158) of gas into a second bottom area of the first space.

16. Method according to one of claims 14 or 15, wherein the second space comprising a bottom opening communicating with a third space suitable for receiving said quantity of separated liquid, with the third space being located under the second space, with the third space being isolated from the first space, the method further comprises:

- conveyance of said quantity of separated liquid in the third space through the bottom opening.

17. Method according to one of claims 14 to 16, wherein the method further comprises:

- the separator being a centrifugal separator, setting into rotation of the separator by the rotation of said turbine.

FIG. 1a

FIG. 1b

FIG. 1c

FIG. 1d

FIG. 2

FIG. 3

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20040144545 A1